# EUROPEAN PATENT APPLICATION

(11) **EP 3 951 707 A1**
(43) Date of publication of application: **09.02.2022**
(21) Application number: 20778101.4
(22) Date of filing: 30.03.2020
(51) Int. Cl.: G06T 7/00

(54) **IMAGE PROCESSING DEVICE AND IMAGE PROCESSING PROGRAM**

(30) Priority: 28.03.2019 JP 2019063808
(71) Applicant: AISIN CORPORATION, Aichi 448-8650 (JP); Kyushu Institute of Technology, Kitakyushu-shi Fukuoka 804-8550 (JP)
(72) Inventor: YAMADA Hideo, Tokyo 101-0021 (JP); SHIBATA Masatoshi, Tokyo 101-0021 (JP); TAMUKOH Hakaru, Kitakyushu-shi, Fukuoka 808-0196 (JP); ENOKIDA Shuichi, Iizuka-shi, Fukuoka 820-8502 (JP); YOSHIHIRO Kazuki, Kitakyushu-shi, Fukuoka 808-0196 (JP)
(74) Representative: TBK
(86) International application number: PCT/JP2020/014637
(87) International publication number: WO 2020/196918

(57) **Abstract**

The objective of the present invention is to reduce the amount of usage of a memory. An image processing device 8 uses a calculation formula based on an ellipse 63 to approximate a base function of a reference GMM 55. The burden rate according to a co-occurrence correspondence point 51 can be approximately determined by a calculation in which the Manhattan distance to the ellipse 63 and the co-occurrence correspondence point 51 and the width of the ellipse 63 are input to a calculation formula for the burden rate based on the base function. In addition, the width of the ellipse 63 is quantized by the nth power of 2 (where n is an integer of 0 or greater), and the calculation can be carried out by means of a bit shift. Thus, if this image processing device 8 stores the parameters defining the ellipse 63, the burden rate can be calculated from these parameters by means of a bit shift; therefore, there is no need to store a burden rate table in memory, so the amount of memory usage can be greatly reduced and the burden rate can be calculated quickly. Furthermore, the image processing device 8 further restricts the memory usage by quantizing the burden rate by the nth power of 2.

## Description

### TECHNICAL FIELD

The present invention relates to an image processing device and an image processing program, and for example, to those which acquire feature amounts from an image.

### BACKGROUND ART

Some image recognition technologies extract image distributions of gradient directions of luminance as feature amounts from images and compare them with distributions of gradient directions of luminance of images learned in advance to recognize targets.

Various types of such technologies have been studied, but one of them represents an occurrence distribution of co-occurrence pairs of the luminance gradient directions by a Gaussian mixture model (which represents a multi-modal distribution by combining a plurality of Gaussian distributions as base functions).

This technology is based on the Gaussian mixture model of the luminance gradient directions obtained by learning many images in which an image recognition target (e.g., a pedestrian) is shown, and extracts feature amounts by comparing the distribution of the luminance gradient directions of an image as a recognition target to the Gaussian mixture model serving as a reference.

In more detail, the feature amount is a burden rate using the distribution of the luminance gradient directions of the image as a recognition target in each base function of the reference the Gaussian mixture model.

For example, the technology described in Non-Patent Literature 1 votes the burden rate based on a height and a distance of a normal distribution to the base function obtained from prior learning when calculating the feature amount.

Meanwhile, in the event that such an image recognition algorithm is implemented on devices with limited computational resources, the burden rate is stored in a table in a memory in advance, and the feature amount is calculated by making reference to it.

However, since an amount of data in the table checked for the burden rate is very large, a problem that a large-scale memory is required has arisen.

### CITATION LIST

### NON-PATENT LITERATURE

Non-Patent Literature 1: Yuya Michishita, "Autonomous State Space Construction Method based on Mixed Normal Distributions for Pedestrian Detection" IEEJ Transactions on Electronics, Information and Systems, Vol.138, No.9, 2018

### DISCLOSURE OF INVENTION

### PROBLEM TO BE SOLVED BY THE INVENTION

The object of the present invention is to decrease memory usage.

### SUMMARY OF THE INVENTION(S)

(1) In order to achieve above mentioned object, the invention described in claim 1 provides an image processing device comprising: image acquiring means for acquiring an image; co-occurrence distribution acquiring means for acquiring a distribution of co-occurrences of luminance gradient directions from the acquired image; calculating means for calculating a base function using the distribution of the co-occurrences, and calculating a feature amount of the image using the base function; and outputting means for outputting the calculated feature amount.
(2) The invention described in claim 2 provides the image processing device according to claim 1, comprising parameter storing means for storing a parameter for defining a base function which approximates a Gaussian mixture model serving as a reference for image recognition, wherein the calculating means calculates the feature amount of the image using the Gaussian mixture model by substituting a distance from each co-occurrence point constituting the acquired distribution of the co-occurrences to a center of the base function and the stored parameter in the base function formula.
(3) The invention described in claim 3 provides the image processing device according to claim 1 or 2, wherein the parameter storing means stores the parameter in accordance with each Gaussian distribution constituting the Gaussian mixture model, and the calculating means calculates a value which becomes an element of the feature amount by using the parameter of the Gaussian distribution in accordance with each Gaussian distribution.
(4) The invention described in claim 4 provides the image processing device according to claim 1, 2, or 3, wherein the calculating means approximately calculates a burden rate using the distribution of co-occurrences for each Gaussian distribution as a value of the element of the feature amount.
(5) The invention described in claim 5 provides the image processing device according to claim 1, 2, 3, or 4, wherein the parameter is a constant which defines an ellipse corresponding to a width of each of the Gaussian distributions.
(6) The invention described in claim 6 provides the image processing device according to claim 5, wherein a direction of a maximum width of the ellipse is parallel or perpendicular to an orthogonal coordinate axis defining the Gaussian mixture model.
(7) The invention described in claim 7 provides the image processing device according to any one of claims 1 to 6, wherein the parameter is quantized to a power of 2, and the calculating means performs the calculation by using a bit shift.
(8) The invention described in claim 8 provides the image processing device according to any one of claims 1 to 7, comprising image recognizing means for performing image recognition of the image by using the feature amount output by the outputting means.
(9) The invention described in claim 9 provides an image processing program for causing a computer to realize: an image acquiring function configured to acquire an image; a co-occurrence distribution acquiring function configured to acquire a distribution of co-occurrences of luminance gradient directions from the acquired image; a calculating function configured to calculate a base function using the distribution of the co-occurrences, and calculate a feature amount of the image using the base function; and an outputting function configured to output the calculated feature amount.

### EFFECT OF THE INVENTION(S)

According to the present invention, it is possible to reduce memory usage since a burden rate is obtained by a calculation without referring to a table.

### BRIEF DESCRIPTION OF DRAWINGS

FIGS. 1 are views for illustrating a method for creating a GMM serving as a reference.
FIGS. 2 are views for illustrating an approximation of the reference GMM.
FIGS. 3 are views for illustrating parameters and variables used for a calculation of a burden rate.
FIG. 4 is a view for illustrating a calculation formula of the burden rate.
FIGS. 5 are views for illustrating a base function in more detail.
FIGS. 6 are views for illustrating a specific calculation of the burden rate.
FIGS. 7 are views for illustrating quantization of the burden rate.
FIG. 8 is a view showing an example of a hardware configuration of an image processing device.
FIG. 9 is a flowchart for illustrating a procedure of image recognition processing.
FIG. 10 is a flowchart for illustrating a procedure of plotting processing.
FIG. 11 is a flowchart for illustrating burden rate calculation processing.
FIGS. 12 are graphs showing experimental results of image recognition.
FIG. 13 is a graph showing image recognition results for each mixed number in a superimposed manner.

### BEST MODE(S) FOR CARRYING OUT THE INVENTION

### (1) Outline of Embodiment

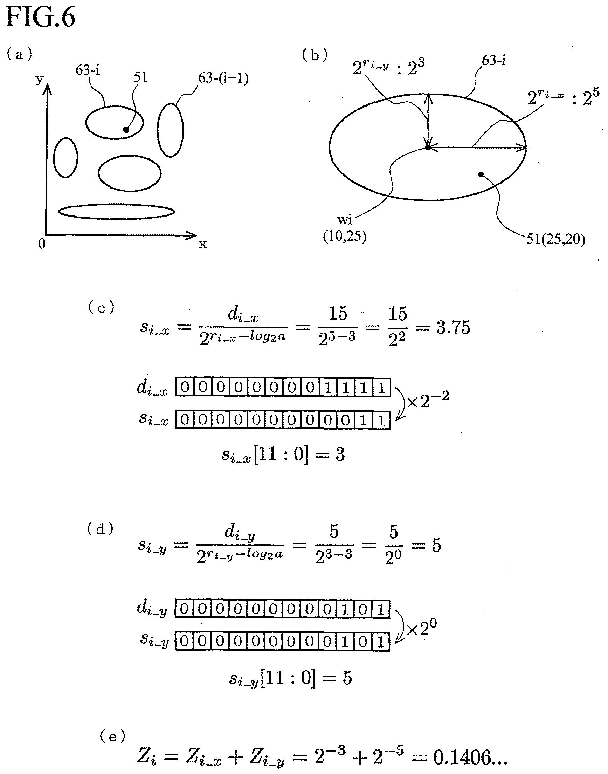

As shown in FIG. 6, an image processing device 8 approximates a base function of a reference GMM 55 with a calculation formula based on an ellipse 63. A burden rate provided by a co-occurrence correspondence point 51 can be calculated in an approximate manner by inputting the ellipse 63, a Manhattan distance to the co-occurrence correspondence point 51, and a width of the ellipse 63 to a calculation formula for the burden rate based on the base function.

Further, the width of the ellipse 63 is quantized by 2 raised to a power of n (n is an integer which is not smaller than 0), and the above calculation can be performed by a bit shift.

In this manner, the image processing device 8 can calculate the burden rate by the bit shift if it stores parameters that define the ellipse 63, which eliminates the need to store a table for the burden rate in a memory and enables calculating the burden rate at high speed while greatly reducing memory usage.

Furthermore, the image processing device 8 conserves the memory usage by quantizing the burden rate by 2 raised to the power of n.

### (2) Details of Embodiment

In this embodiment is used a MRCoHOG feature amount, in which a frequency of occurrence of a co-occurrence of a luminance gradient direction across different resolutions of the same image is a feature amount.

First, a description will be given on a method for creating a Gaussian Mixture Model (which will be referred to as a GMM hereinafter) serving as a reference for image recognition from such luminance gradient directions.

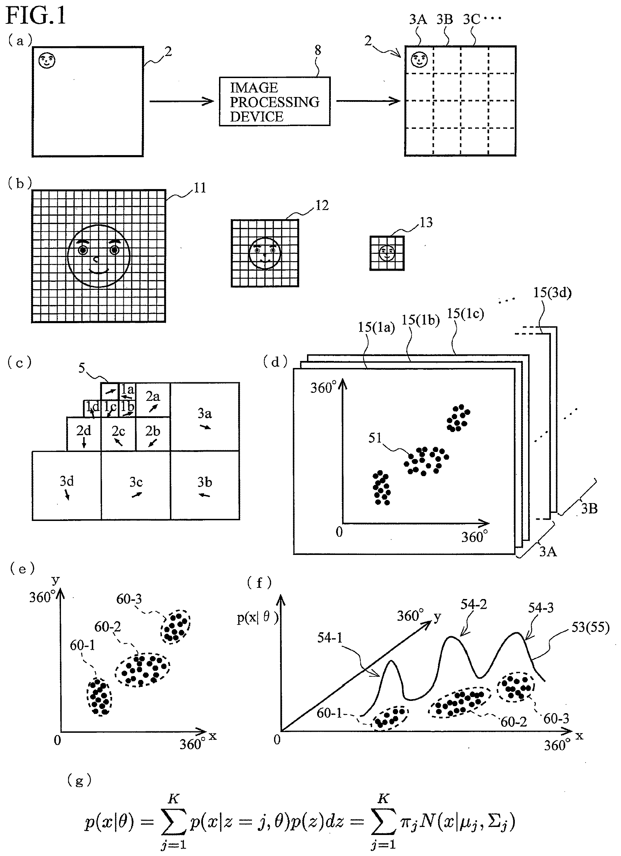

FIGS. 1 are views for illustrating a method for creating the GMM serving as a reference.

As shown in FIG. 1(a), the image processing device 8 accepts the input of an image 2 to create the reference GMM, and divides it into a plurality of block regions 3A, 3B, ... of the same rectangular shape. The image 2 is, for example, an image showing a pedestrian, a target of the image recognition.

In the drawing, the division is shown as 4x4 for ease of illustration, but standard values are, for example, 4x8.

It is to be noted that the block regions 3A, 3B, ... are not specifically distinguished, they are simply referred to as block regions 3.

The image processing device 8 divides the image 2 into the block regions 3, converts a resolution of the image 2, and generates a high-resolution image 11, a medium-resolution image 12, and a low-resolution image 13 which have different resolutions (image sizes) as shown in FIG. 1(b). If the resolution of the image 2 is appropriate, the image 2 is used as a high-resolution image without change.

The drawing shows the high-resolution image 11, the medium-resolution image 12, and the low-resolution image 13 of a portion of the block region 3A, and each square schematically represents a pixel.

Moreover, the image processing device 8 calculates a luminance gradient direction (a direction from low luminance to high luminance) of each pixel in the high-resolution image 11, the medium-resolution image 12, and the low-resolution image 13. An angle of this luminance gradient direction is a continuous value of 0° to 360°.

It is to be noted that, in the following, the luminance gradient direction is simply referred to as a gradient direction.

When the image processing device 8 calculates the gradient direction in this manner, it acquires a co-occurrence of gradient directions of a pixel serving as a reference (which will be referred to as a pixel of interest hereinafter) and a pixel present at a position away from it (which will be referred to as an offset pixel hereinafter) as follows.

First, as shown in FIG. 1(c), the image processing device 8 sets the pixel of interest 5 in the high-resolution image 11, and focuses on offset pixels 1a to 1d at an offset distance 1 from (namely, in the high resolution, adjacent to) the pixel of interest 5 in the high-resolution image 11.

It is to be noted that a distance corresponding to n pixels is called an offset distance n.

Additionally, the image processing device 8 acquires co-occurrences of respective gradient directions (combinations of gradient directions) of the pixel of interest 5 and the offset pixel 1a to the offset pixel 3d, determines points corresponding to them as co-occurrence correspondence points 51, 51, ..., and plots them on feature planes 15(1a) to 15(3d) shown in FIG. 1(d).

It is to be noted that the image processing device 8 creates the feature planes 15(1a) to 15(3d) of the medium-resolution image 12 shown in FIG. 1(d) in accordance with the respective block regions 3A, 3B ..., divided in FIG. 1(a).

In the case of referring to the plurality of feature planes as a whole, they are referred to as feature planes 15 hereinafter.

For example, in FIG. 1(c), in case of plotting the co-occurrence of the pixel of interest 5 and the offset pixel 1a, if the gradient direction of the pixel of interest 5 is 26° and the gradient direction of the offset pixel 1a is 135°, the image processing device 8 plots the co-occurrence correspondence point 51 at a position where an axis of abscissa of the feature plane 15(1a) for the offset pixel 1a is 26° and an axis of ordinate of the same is 135°.

Further, the image processing device 8 takes the co-occurrence of the pixel of interest 5 and the offset pixel 1a and plots it on the feature plane 15(1a) while sequentially shifting the pixel of interest 5 within the high-resolution image 11.

In this way, the feature plane 15 represents the frequency of occurrence of two gradient direction pairs with a certain offset (a relative position from the pixel of interest 5) in the image.

It is to be noted that, in FIG. 1(c), the co-occurrence is observed for the pixel on the right side of the pixel of interest 5 in the drawing, because a shift path is set up so that the pixel of interest 5 is first shifted from the upper leftmost pixel to a right pixel in sequence in the drawing, and when it reaches the rightmost pixel, it is shifted down one level to the leftmost pixel and then to the right, so that acquisition of duplicate co-occurrence combinations is avoided as the pixel of interest 5 is shifted.

Further, the shift of the pixel of interest 5 is performed within the block region 3A (within the same block region), but selection of the offset pixel is performed even if it exceeds the block region 3A.

At the end portion of the image 2, the gradient direction cannot be calculated, but this is processed by any appropriate method.

Subsequently, the image processing device 8 acquires a co-occurrence of gradient directions of the pixel of interest 5 and the offset pixel 1b (see FIG. 1(c)) and plots the co-occurrence correspondence point 51 corresponding to this on the feature plane 15(1b).

It is to be noted that the image processing device 8 prepares a new feature plane 15 different from the feature plane 15(1a) previously used for the pixel of interest 5 and the offset pixel 1a, and votes for it. In this manner, the image processing device 8 generates the feature plane 15 in accordance with each relative positional relationship combination of the pixel of interest 5 and the offset pixel.

Furthermore, the co-occurrence of the pixel of interest 5 and the offset pixel 1b is taken and the co-occurrence correspondence point 51 is plotted on the feature plane 15(1b) while sequentially shifting the pixel of interest 5 within the high-resolution image 11.

Thereafter, the image processing device 8 likewise prepares individual feature planes 15(1c) and 15(1d) for the combination of the pixel of interest 5 and the offset pixel 1c and the combination of the pixel of interest 5 and the offset pixel 1d, and plots the co-occurrences of the gradient directions.

In this way, upon generating the four feature planes 15 for the pixel of interest 5 and the offset pixels 1a to 1d at the offset distance 1 from the pixel of interest 5, the image processing device 8 focuses on the pixel of interest 5 in the high-resolution image 11 and offset pixels 2a to 2d at an offset distance 2 in the medium-resolution image 12.

Moreover, with the same technique as that described above, a feature plane 15(2a) based on a combination of the pixel of interest 5 and the offset pixel 2a, and also feature planes 15(2b) to 15(2d) based on combinations of offset pixels 2b, 2c, and 2d are created.

Additionally, for the pixel of interest 5 in the high-resolution image 11 and offset pixels 3a to 3d at an offset distance 3 in the low-resolution image 13, the image processing device 8 likewise creates feature planes 15(3a) to 15(3d) in accordance with respective relative positional relationship combinations of the pixel of interest 5 and the offset pixels 3a to 3d.

The image processing device 8 also performs the above processing on the block regions 3B, 3C, ..., and generates the plurality of feature planes 15 in which features of the image 2 have been extracted.

In this way, the image processing device 8 generates the plurality of feature planes 15(1a) to 15(3d) for the respective block regions 3A, 3B, 3C, ....

Further, for each of these feature planes 15, the image processing device 8 generates the GMM as follows.

It is to be noted that, for the sake of simplicity, the GMM is generated from the feature planes 15 created from the image 2 here, but in more detail, the GMM is generated for the superimposed feature planes 15 acquired from many learned images.

FIG. 1(e) represents one of the pluralities of feature planes 15 and, first, the image processing device 8 combines close ones of these co-occurrence correspondence points 51 to cluster them into clusters (groups) of a mixed number K.

The mixed number represents the number of Gaussian distributions which are mixed in generating the GMM, and if this is specified appropriately, the image processing device 8 clusters the co-occurrence correspondence points 51 to an automatically specified number.

In this embodiment, as will be described later, experiments were conducted for cases where K=6, K=16, K=32, and K=64.

In the FIG. 1(e), K=3 is set for simplicity, and the co-occurrence correspondence points 51 are clustered into clusters 60-1 to 60-3.

The co-occurrence correspondence points 51, 51, ... plotted on the feature planes 15 tend to gather in accordance with features of the image, and the clusters 60-1, 60-2, ... reflect the features of the image.

Since a feature dimension in the image recognition depends on the mixed number K, whether the mixed number K can be reduced without losing the features of the image is one of important issues.

As will be explained later in experimental results, there was almost no difference in the image recognition according to this embodiment for K=6, K=16, K=32, and K=64, indicating that the technique according to this embodiment enables performing the practical image recognition with a low mixed number.

As shown in FIG. 1(f), after clustering the co-occurrence correspondence points 51, the image processing device 8 uses a probability density function p(x|θ), which is a linear superimposition of K Gaussian distributions (Gaussian distributions 54-1, 54-2, 54-3), to represent a probability density function 53 of the co-occurrence correspondence points 51 on the feature planes 15. In this manner, the Gaussian distributions are used as the base function (a function which is a target of a linear sum and is an element which constitutes the GMM), and the probability density function 53 expressed by the linear sum is the GMM.

The image processing device 8 uses the probability density function 53 as a reference GMM 55 to determine the similarity between the learned target and the subject.

A specific formula for the probability density function p(x|θ) is as shown in FIG. 1(g).

Here, x is a vector quantity representing a distribution of co-occurrence correspondence points 51, and θ is a vector quantity representing a parameter (pj, Σj) (where j=1, 2, ... K).

πj is called a mixing coefficient, and represents the probability of selecting a jth Gaussian distribution. µj and Σj represent an average value and a variance-covariance matrix of the jth Gaussian distribution, respectively. The probability density function 53, i.e., the reference GMM 55 is uniquely determined by πj and θ.

z is a potential parameter used to calculate an EM algorithm or a burden rate, and z1, z2, ..., zk are used in correspondence with k Gaussian distributions to be mixed. The probability of z calculated posteriorly from the distribution of x is the burden rate.

Although the explanation will be omitted, the EM algorithm is an algorithm for estimating the likelihood-maximizing πj and the parameter (µj, Σj), and the image processing device 8 determines πj, θ by applying the EM algorithm, and thereby obtains p(x|θ).

The reference GMM 55 is formed by determining the Gaussian distributions 54-1, 54-2, 54-3 (not shown) at positions of the clusters 60-1, 60-2, 60-3 as the base functions and mixing them.

Further, the burden rate of each co-occurrence correspondence point 51 to the Gaussian distribution 54-1, 54-2, or 54-3 is calculated using the reference GMM 55, and a total value of the burden rate for each Gaussian distribution 54 voted for the Gaussian distribution 54-1, 54-2, or 54-3 becomes a MRCoHOG feature amount.

It is to be noted that, in the following, when the Gaussian distributions 54-1, 54-2, and 54-3 are not specifically distinguished, they will be simply referred to as Gaussian distributions 54, and the same is applied to other components.

The image recognition is performed using the thus generated MRCoHOG feature amounts, but if the burden rate is calculated by directly applying the reference GMM 55, a computer with high computational capability is required.

Therefore, in case of implementing in devices with limited computing resources, the burden rate for each Gaussian distribution 54 was conventionally obtained by preparing a burden rate table in memory, which was created in advance using the reference GMM 55, and referring to this table.

This requires a large amount of memory resources, and it was not suitable for the image recognition devices to be realized in small, inexpensive semiconductor devices such as an FPGA (field-programmable gate arrays) or an IC chip.

Thus, in this embodiment, an approximate formula of the reference GMM 55 that is easy to calculate is implemented in the image processing device 8 so that the burden rate can be calculated by a simple hardware-oriented calculation using a small number of parameters without referring to the burden rate table. This method will now be described hereinafter.

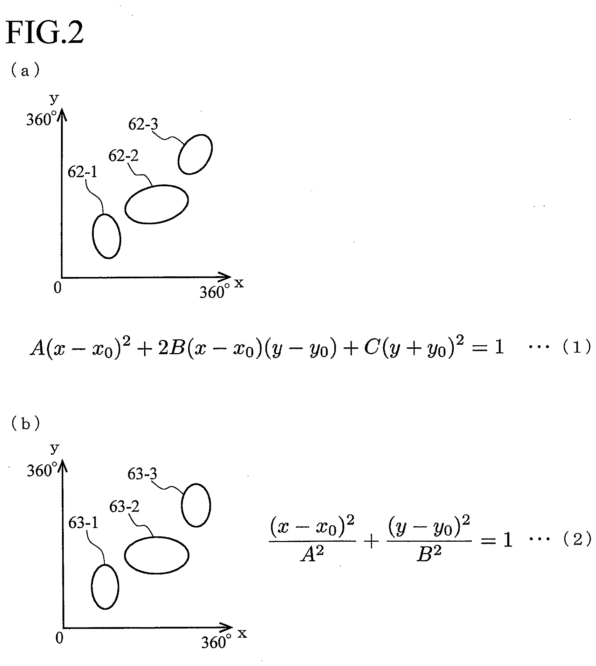

Each view of FIG. 2 is a view for illustrating the approximation of the reference GMM 55.

Ellipses 62-1, 62-2, and 62-3 in FIG. 2(a) are provided by cutting the Gaussian distributions 54-1, 54-2, and 54-3 as the original base functions of the reference GMM 55 into circles at an appropriate height (p(x|θ)) and projecting them onto an xy plane which is a domain of definition of the reference GMM 55.

These ellipses 62-1, 62-2, and 62-3 are formed in correspondence with positions of the clusters 60-1, 60-2, and 60-3.

These ellipses 62 may be obtained from the Gaussian distributions 54, or shapes enclosing the clusters 60 in a balanced manner may be appropriately set.

Since each Gaussian distribution 54 is a two variable normal distribution, a width of a line of a cross section at predetermined p(x|θ) reflects a width of a standard deviation of these two variables, resulting in each ellipse 62 with a principal axis (a major axis) and an accessory axis (a minor axis) orthogonal to each other and rotated in an arbitrary direction.

The reference GMM 55 in this embodiment has the base function provided by approximating the Gaussian distributions 54 using a combination of the ellipses 62 and a calculation formula described below.

Further, substituting parameters that define the individual ellipses 62 formed on the xy plane into the calculation formula leads to forming the individual base functions which approximate the individual Gaussian distributions 54.

This makes it easier to calculate the burden rate using the reference GMM 55.

Each ellipse 62 is represented by Expression (1), and only parameters that the image processing device 8 should store to identify the ellipse 62 are coefficients A, B, and C for each ellipse 62 and coordinate values (x0, y0) of the center of the ellipse 62.

The memory required is 5x64=320 bits per ellipse 62, and the memory required for image recognition is as small as 39.4 KB in total.

It is to be noted that a subscript 0 such as x0 is shown in a double-byte character to prevent garbling. This is also applied to other calculation formulas in the following.

Although it is also possible to calculate the burden rate using each ellipse 62 with its principal axis rotated by an arbitrary angle from the coordinate axis of the reference GMM 55 in this manner, the calculation becomes complicated, hence, in this embodiment, the ellipses 62-1, 62-2, and 62-3 are rotated so that a direction of a maximum width (a direction of the principal axis) is parallel or perpendicular to the coordinate axis of the reference GMM 55, as shown in FIG. 2(b) to set the ellipses 63-1, 63-2, and 63-3, and the base functions of the reference GMM 55 are configured based on this.

The direction of the maximum width is determined to be parallel to either the x-axis or the y-axis whichever has a smaller rotation angle, but the direction of rotation may be determined by experiments.

Furthermore, it is also possible to appropriately shape the ellipse 63 so that it becomes larger or flatter as it rotates.

According to experiments conducted by the present inventors, a considerable difference was not observed in image recognition accuracy between a case using the ellipses 62 and a case using the ellipses 63, confirming that the ellipses 63 can be used.

In this manner, the direction of the maximum width of each ellipse used in this embodiment is parallel or perpendicular to the orthogonal coordinate axis defining the Gaussian mixture model.

Each ellipse 63 is represented by Expression (2), and only parameters that the image processing device 8 should store to identify the ellipse 63 are coefficients A and B for each ellipse 63 and coordinate values (x0, y0) of the center of the ellipse 62.

The memory required is 4x64=256 bits per ellipse 63, and the memory required for image recognition is as small as 31.5 KB in total.

It is to be noted that the actual parameters used in the calculation of the burden rate are a principal axis radius (a width of the Gaussian distribution in the principal axis direction), an accessory axis radius (a width of the Gaussian distribution in the accessory axis direction), and coordinate values of the center, as described below, but the memory consumption is the same since there are likewise only four parameters to be stored in this case.

Although the configurations of the ellipses 62 and the ellipses 63 have been explained, but they can be generated automatically or manually.

Moreover, it is possible to determine a final form by heuristically correcting experimental results while observing them.

Next, a description will be given on a calculation formula used for the base functions and a calculation method for the burden rate.

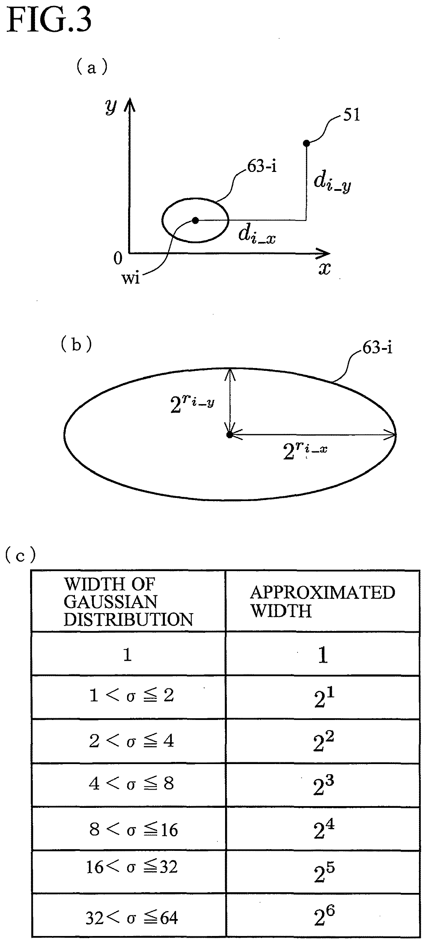

Each view in FIG. 3 is a view for illustrating parameters and variables used for a calculation of the burden rate.

The center of an ellipse 63-i (an ith ellipse 63 which is any one of the ellipses 63-1, 63-2, ..., and the same is applied to other components hereinafter) in FIG. 3(a) is wi, and a distance between the co-occurrence correspondence point 51 and wi is represented by di_x which is a distance in the x-axis direction and di_y which is a distance in the y-axis direction.

A distance measured along such a coordinate axis is referred to as a Manhattan distance, which facilitates a calculation in hardware as compared to a Euclidean distance.

Additionally, as shown in FIG. 3(b), a radius (a width) in the x-axis direction and a radius (a width) in the y-axis direction of the ellipse 63-i are represented by 2 raised to the power of n (n is an integer greater than or equal to 0, which may be the power of 2 by an integer greater than or equal to 0, or may be the power of 2 including a power of 0), and the respective widths are quantized by 2 raised to a power of ri_x and 2 raised to a power of ri_y. ri_x and ri_y are integers greater than or equal to 0 such as 0, 1, 2, ....

This quantization was obtained by approximation in accordance with a width quantization table in FIG. 3(c). For example, a radius of an ellipse corresponds to a standard deviation σ, which is a width of the Gaussian distribution, but the approximation is performed using 2 raised to a power of 1 for 1<σ≤2, 2 raised to a power of 2 for 2<σ≤4, ..., and so on.

Approximating/quantizing the radius of the ellipse 63 by 2 raised to the power of n in this manner enables a later-described operation (division in this embodiment) using a bit shift.

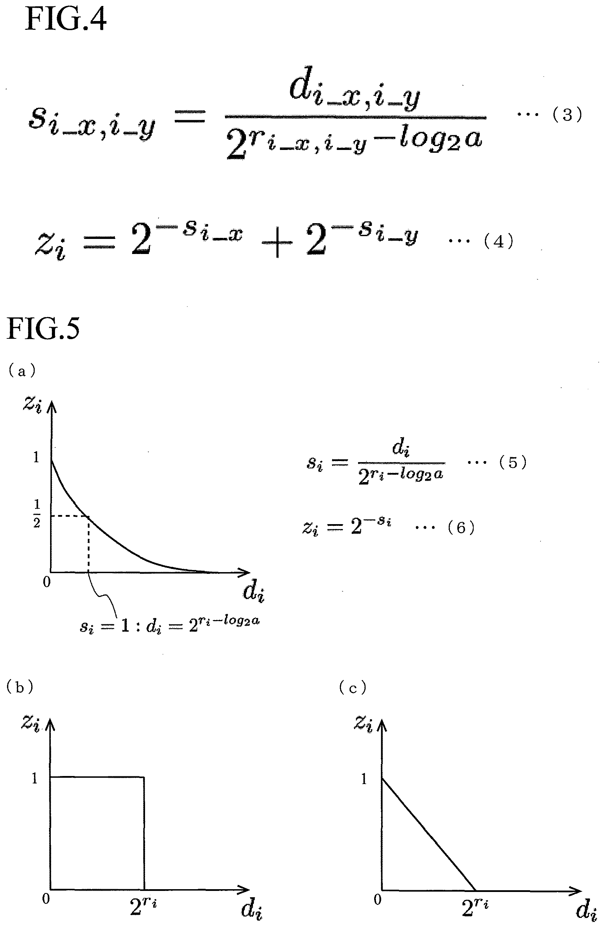

FIG. 4 is a view for illustrating a calculation formula of the burden rate.

The burden rate is a posterior distribution of the latent variable z (a distribution of z when the co-occurrence correspondence points 51 are given), and is represented by p(kz=1|x).

In a simple explanation, the distribution of the co-occurrence correspondence points 51 contributes to formation of the Gaussian distribution 54-1, the Gaussian distribution 54-2, ..., and since the GMM is a linear sum of the Gaussian distributions, this accumulates (as the sum) to constitute the probability density function 53 of the reference GMM 55.

At that time, the probability of a given co-occurrence corresponding point 51 belonging to the Gaussian distribution 54-1, the Gaussian distribution 54-2 and the... (a contribution percentage) is the burden rate of this co-occurrence corresponding point 51 to each Gaussian distribution 54.

In this embodiment, to facilitate calculations using a computer, the Gaussian distributions constituting the Gaussian mixture distribution are approximated by si_x, i_y defined by Expression (3) shown in FIG. 4, and the burden rate is approximated by a calculation formula using zi in Expression (4). In other words, si_x, i_y defined by parameters of the ellipse 63-i is equivalent to the base function, and zi is equivalent to the calculation formula for feature amounts corresponding to the base function.

This formula was devised by the inventors of this application to implement calculations of similarity in hardware, and this time it was found that it can be appropriately hardwired as an approximation formula for calculating the burden rate.

By substituting the distributions of co-occurrences and the parameters into the formula of zi, it is possible to easily calculate the burden rate, which is a feature amount of an image, using the Gaussian mixture model in an approximate manner.

FIGS. 5 are views for illustrating the base function in more detail.

Expressions (3) and (4) are a combination of formulas for two variables in the x-axis and y-axis directions, and for clarity, each of Expressions (5) and (6) in FIG. 5(a) is configured from the former to have one variable.

As shown in the graph in the drawing, zi is 1 when a distance di between the co-occurrence correspondence point 51 and the center of the ellipse 63-i is 0, and it gradually decreases as di moves away from the center. Further, if si is 1 (that is, di=2 raised to (a power of ri-log2a)), zi becomes 1/2, and as di increases further, it gradually approaches 0.

How zi extends is defined by a radius ri of the ellipse 63-i, and the smaller the ri is, the steeper the shape becomes.

The term "a" in log2a with 2 as a base is a term which defines a calculation accuracy set by the present inventors when studying the foregoing similarity, and is usually set to a=8 bits or 16 bits when hardware is implemented. If this term is to be ignored, zi is 1/2 when di is equal to a width of ellipse 63.

In this way, zi has similar properties to the Gaussian distributions, and this calculation formula can be used to appropriately approximate the Gaussian distributions.

In addition, in si, di is divided by 2 raised to the power of (ri-log2a), but since the division by 2 raised to the power of n can be performed very easily in hardware by the bit shift, the approximation of the Gaussian distributions can be carried out with the use of the bit shift by using zi.

Therefore, in this embodiment, the Gaussian distribution 54-i is approximated by zi, and zi which represents the probability of belonging to the Gaussian distribution 54-i in an approximate manner is adopted as the burden rate.

Although the calculation formula for calculating the burden rate is defined by Expression (4) in the above description, it can be applied as a base function as long as it is possible to assign the percentage of co-occurrence correspondence points 51 belonging to the Gaussian distributions 54 based on the ellipses 63 without being restricted this expression.

For example, there can be used a function where zi=1 for 0≤di<2 raised to the power of ri and zi=0 for 1≤ri as shown in FIG. 5(b) (in case of the two dimension, an elliptic column with a radius width of 2 raised to the power of ri_x and 2 raised to the power of ri_y), a function where zi decreases linearly as di increases from 0 to ri and zi=0 for 1≤2 raised to the power of ri as shown in FIG. 5(c) (in the two dimension, an elliptic cone whose bottom plane radius width is 2 raised to the power of ri_x and 2 raised to the power of ri_y), and other wavelet-type and Gabor-type functions localized for the ellipse 63.

The extent to which these base functions can be used for the image recognition is verified by experiments.

Each view of FIG. 6 is a view for illustrating a specific calculation of the burden rate.

As shown in FIG. 6(a), the co-occurrence correspondence point 51 inside the ellipse 63-i will now be considered and the burden rate of this point to the ellipse 63-i will be found.

As shown in FIG. 6(b), the radius 2 raised to the power of ri_x in the x-axis direction of the ellipse 63-i is 2 raised to the power of 5, and the radius 2 raised to the power of ri_y in the y-axis direction is 2 raised to the power of 3.

Further, coordinate values of the center wi of the ellipse 63-i are (10, 25) and coordinate values of the co-occurrence correspondence point 51 are (25, 20).

As shown in FIG. 6(c), for the x-axis direction, di_x=15 and ri_x=5. Substituting these into Expression (3) and calculating it results in si_x=3.75.

On the other hand, as shown in the drawing, if di_x is represented by a bit string (000000001111) and shifted by -2 to divide it by 2 raised to the power of 2 (i.e., shifted to the right by 2), a bit string (000000000011) corresponding to si_x is obtained.

When the value represented by this bit string is converted to a decimal number, it becomes 3 as shown in the drawing, which is a previously calculated value with a decimal point truncated. In this embodiment, errors after the decimal point are ignored.

As shown in FIG. 6(d), for the y-axis direction, di_y=5 and ri_y=3. Substituting these into Expression (3) and calculating it results in si_y=5.

On the other hand, as shown in the drawing, if di_y is represented by a bit string (000000000101) and shifted to the right by 0 (i.e., not shifted) to divide it by 2 raised to the power of 0, a bit string (000000000101) corresponding to si_y is obtained.

When the value represented by this bit string is converted to a decimal number, it becomes 5 as shown in the drawing, which is equal to a previously calculated value.

Therefore, as shown in FIG. 6(e), the burden rate zi for the Gaussian distribution 54-i of the co-occurrence correspondence point 51 (the Gaussian distribution 54-i corresponding to the ellipse 63-i) is approximated as 0.1406... by adding zi_x and zi_y.

In the same way, Expression (4) can be applied to an ellipse 63-(i+1) and other ellipses 63 to calculate (an approximate value of) the burden rate of co-occurrence correspondence points 51 to these Gaussian distributions 54.

In this way, the burden rate of a given co-occurrence correspondence point 51 for each Gaussian distribution 54 can be calculated, and the burden rates obtained by performing the calculation for all the co-occurrence correspondence points 51 can be aggregated (voted) for each Gaussian distribution 54, and this can be carried out for all the feature planes 15, concatenated, and further normalized to obtain MRCoHOG feature amounts.

As described above, the image processing device 8 includes calculating means for calculating feature amounts of an image using the Gaussian mixture model by applying the distribution and the parameters of co-occurrences to the base functions (i.e., by substituting them into the calculation formula for the burden rates based on the base functions). Specifically, a distance (a Manhattan distance) from each co-occurrence point (the co-occurrence correspondence point 51) that constitutes the acquired distribution of co-occurrences (60-1 in FIG. 1(e)...) to the center of the base function (FIG. (3) wi) and the stored parameters are substituted into the calculation formula (Expression (3) in FIG. 4, Expression (5) in FIG. 5, and the like) for the feature amounts corresponding to the base function (si_x, i_y in FIG. 4), to calculate the feature amounts (zi in Fig. 4 Expression (4), in FIG. 5 Expression (6)) of the image using the Gaussian mixture model, which constitutes calculating means.

Then, the calculating means approximately calculates the burden rate which uses the distribution of co-occurrences for each Gaussian distribution as a value that is an element of the feature amount by using parameters of the Gaussian distribution for each Gaussian distribution. In addition, a width of the ellipse 63, which is a parameter defining the base function, is quantized to a power of 2, and the calculating means uses the bit shift to calculate the feature amount.

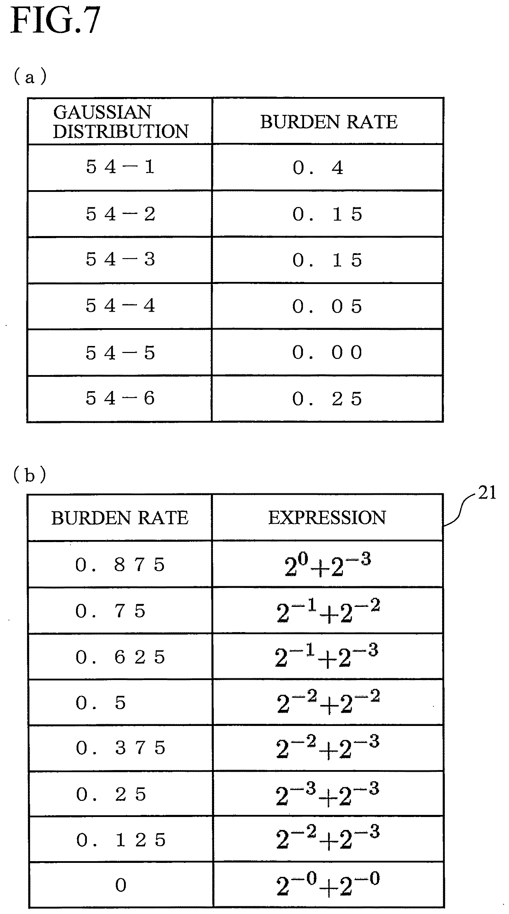

FIGS. 7 are views for illustrating quantization of the burden rate.

After calculating the burden rate using Expression (4), the image processing device 8 further quantizes it to 2 raised to the power of n to save memory consumption.

FIG. 7(a) shows an example of the burden rate for a Gaussian distribution 54-i without quantization.

It is to be noted that, in this example, the mixed number K=6 is set, and i takes a value from 1 to 6.

When the burden rate is not quantized, it is expressed in 64 bits, for example, the burden rate in Gaussian distribution 54-1 is 0.4, the burden rate in Gaussian distribution 54-2 is 0.15, ....

FIG. 7(b) shows an example of a quantization table 21 for the burden rates.

The quantization table 21 divides the 64 bit representation of the burden rates into eight levels which are 0.875 or more, 0.75 or more but less than 0.875, 0.625 or more but less than 0.75, ..., and approximates them to a 3 bit representation by shift addition (addition of 2 raised to the power of n) of (2 raised to a power of 0)+(2 raised to a power of -3), (2 raised to a power of -1)+(2 raised to a power of -2), ..., respectively.

When the image processing device 8 calculates the burden rates, it conserves memory consumption by referring to the quantization table 21 and approximating them to the 3 bit representation.

It is to be noted that, according to a trial calculation, for example, the 64 bit representation consumes 20412KB of the memory, while the 3 bit representation consumes 319KB of the memory.

Furthermore, quantizing the burden rates into a form of the shift addition can facilitate a later calculation using hardware.

Although the description has been given on the method for extracting the MRCoHOG feature amounts from an image with the use of the burden rates, the feature amounts can be input to an identification instrument such as an existing neural network that has learned a target in advance to perform the image recognition.

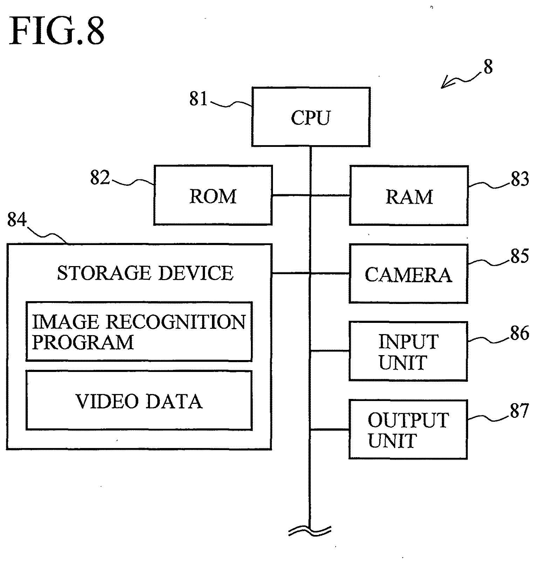

FIG. 8 is a view showing an example of a hardware configuration of the image processing device 8.

The image processing device 8 is mounted in, e.g., a vehicle and performs the image recognition of a pedestrian in front of the vehicle.

In this example, a CPU 81 extracts feature amounts of the image, but dedicated hardware for the feature amount extraction can be formed of a semiconductor device and this can be mounted.

In the image processing device 8, the CPU 81, a ROM 82, a RAM 83, a storage device 84, a camera 85, an input unit 86 and an output unit 87 are connected through bus lines.

The CPU 81 is a central processing device, and it operates according to an image recognition program stored in the storage device 84 and performs image processing to extract feature amounts from the image described above, image recognition processing using the extracted feature amounts, and the like.

The ROM 82 is a read-only memory and stores basic programs or parameters configured to operate the CPU 81.

The RAM 83 is a memory in which reading and writing are possible, and provides a working memory for the CPU 81 to perform the feature amount extraction processing or the image recognition processing. In this embodiment, it is possible to store parameters of the ellipses 63 (center coordinate values, widths in the principal axis and accessory axis directions) or bit strings used for the bit shift.

The storage device 84 consists of a large-capacity storage medium such as a hard disk, and includes an image recognition program and data required for MRCoHOG feature amounts such as captured video data, a reference GMM 55, parameters of ellipses 63, the quantization table 21, and the like.

The CPU 81 can extract feature amounts of an image by using these reference GMM 55, parameters of ellipses 63, quantization table 21, and the like according to the image recognition program.

Here, the storage device 84 stores the parameters of the ellipses 63 for each ellipse 63, and functions as parameter storing means for storing the parameters defining the base function which approximates the Gaussian mixture model, which serves as an image recognition reference, for each Gaussian distribution which constitutes the Gaussian mixture model. Moreover, the parameters defining widths in the principal axis and accessory axis directions are constants which define ellipses corresponding to widths of the respective Gaussian distributions.

The camera 85 takes, for example, video of a view in front of the vehicle. The captured video data is constituted of frame images, which are chronologically consecutive still images, and these individual frame images are the images as image recognition targets.

The input unit 86 includes an input device configured to, for example, accept input from an operator, and it accepts various operations for the image processing device 8.

The output unit 87 includes output devices such as a display and a speaker which present various kinds of information to the operator, and outputs operation screens or image recognition results of the image processing device 8.

A description will now be given on a procedure of the image recognition processing performed by the image recognition device 8 with the use of a flowchart.

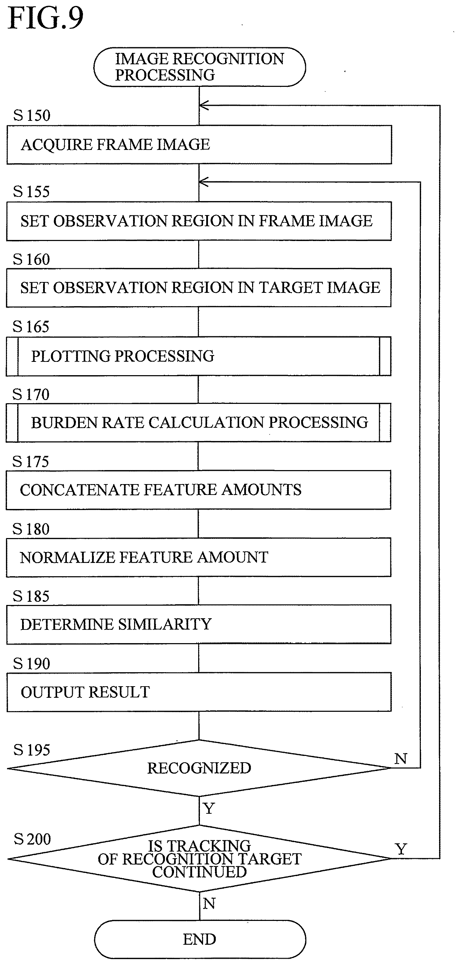

FIG. 9 is a flowchart for illustrating the procedure of the image recognition processing performed by the image recognition device 8.

Here, a description will be given on a case where a pedestrian is tracked by an on-vehicle camera as an example.

The camera 85 of the image processing device 8 takes video of the outside of the vehicle (for example, the front of the vehicle) as a subject.

The vehicle tracks a pedestrian using the image processing device 8 and outputs it to a control system of the vehicle, and the control system supports a driver's steering operation and braking operation based on this to enhance safety.

The following processing is performed by the image processing device 8 by having the CPU 81 execute the image recognition program in the storage device 84.

First, the image processing device 8 acquires a frame image from the video data transmitted from the camera and stores them in the RAM 83 (Step 150).

Thus, the image processing device 8 includes image acquiring means for acquiring images.

Next, the image processing device 8 sets a rectangular observation region (an image-of-interest region) for detecting the pedestrian in the frame image stored in RAM 83 (Step 155).

For the initial pedestrian detection, since it is not known where the pedestrian is shown, the image processing device 8 generates a random number (a particle) with white noise based on, e.g., an appropriate initial value, and sets an observation region of appropriate size at an appropriate position based on this.

The image processing device 8 sets an image included in the observation region as a target for the image recognition and stores it in the RAM 83 (Step 160).

Subsequently, the image processing device 8 performs later-described plotting processing for the image, extracts feature amounts using co-occurrences in a gradient direction from the image, and stores them in the RAM 83 (Step 165).

Then, the image processing device 8 reads parameters of the reference GMM 55 or the ellipses 63 from the RAM 83 and uses them to calculate the burden rates for each feature plane 15 of the image (Step 170).

Then, the image processing device 8 concatenates the burden rates calculated for each feature plane 15 with respect to all feature planes 15 to form feature amounts representing features of the entire target image (Step 175), and normalizes and stores them in the RAM 83 (Step 180).

Thus, the image processing device 8 includes outputting means for outputting the calculated feature amounts.

Further, the image processing device 8 inputs the normalized feature amounts to an identification instrument constituted of a neural network or other discriminating mechanism, and determines the similarity between the frame image and the pedestrian from the output values (Step 185).

Then, the image processing device 8 outputs the results to the RAM 83 (Step 190).

Based on the results of the similarity determination, the image processing device 8 determines whether the pedestrian was recognized within the observation region in the frame image (Step 195).

In other words, if the results of the similarity determination are non-similarity, the image processing device 8 determines that the pedestrian could not be recognized in the frame images within the observation region (Step 195; N), and returns to Step 155 to further set a different observation region from the previous one in the frame image and repeat the recognition of the pedestrian.

On the other hand, in case of similarity, the image processing device 8 determines that the pedestrian could be recognized within the observation region in the frame image (Step 195; Y), and outputs the recognition result to the control system of the vehicle.

Thus, the image processing device 8 includes image recognizing means for recognizing images with the use of feature amounts.

Moreover, the image processing device 8 determines whether to continue tracking the recognized target further (Step 200). As to this determination, for example, the tracking is determined not to continue when the vehicle stops traveling, such as when it arrives at its destination, and the tracking is determined to continue when the vehicle is still traveling.

If the tracking has been determined not to continue (Step 200; N), the image processing device 8 terminates the image recognition processing.

On the other hand, if the tracking has been determined to continue (Step 200; Y), the image processing device 8 returns to Step 150 and performs similar image recognition processing on the next frame image.

It is to be noted that, in the second or subsequent image recognition, the image processing device 8 sets the observation region in the vicinity where the pedestrian was detected in the previous image recognition at Step 155.

This is because the pedestrian is considered as being present in the current frame image in the vicinity where he/she was detected in the previous frame image.

To realize this, for example, it is effective to use a particle filter technique, which generates normally distributed random numbers (particles) around the observation region where the pedestrian was detected last time, generates observation regions one after another in correspondence with the random numbers, and searches for an observation region with the highest similarity.

As described above, the image processing device 8 can detect and track the pedestrian from vehicle exterior images taken by the on-vehicle camera.

It is to be noted that this technique can be applied to surveillance cameras and other systems that track moving objects based on video besides the on-vehicle camera.

Additionally, although the recognition target is the pedestrian, it is also possible to recognize, for example, white lines, traffic lights, and signs on the road while traveling, and apply this to automatic driving.

Further, it is also possible to apply to so-called convoy driving, in which a vehicle traveling ahead is tracked by the image recognition and subjected to follow up travel control.

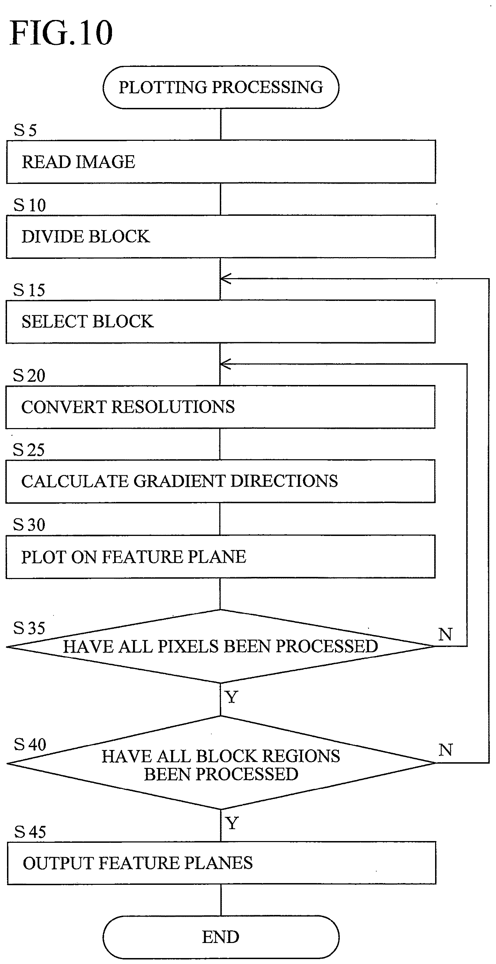

FIG. 10 is a flowchart for illustrating a procedure of the plotting processing at Step 165.

First, the image processing device 8 reads an image (a frame image acquired from video data) which is a target for feature extraction from the RAM 83 (Step 5).

Then, the image processing device 8 divides the image into block regions 3 and stores a position of the division in the RAM 83 (Step 10).

Then, the image processing device 8 selects one of the block regions 3 of the divided high-resolution image 11 (Step 15), and generates from it pixels of the high-resolution image 11, pixels of the medium-resolution image 12, and pixels of the low-resolution image 13 which are co-occurrence targets and stores them in the RAM 83 (Step 20).

It is to be noted that, if the image is used as the high-resolution image 11 as it is, pixels of the image are used as the pixels of the high-resolution image 11 without converting the resolution.

Subsequently, the image processing device 8 calculates gradient directions of individual pixels in the its high-resolution image 11, the medium-resolution image 12, and the low-resolution image 13, and store them in the RAM 83 (Step 25).

Then, the image processing device 8 takes co-occurrences of the gradient directions in the high-resolution image 11, between the high-resolution image 11 and the medium-resolution image 12, and between the high-resolution image 11 and the low-resolution image 13, and plots it on the feature plane 15 and stores them in the RAM 83 (Step 30). As a result, feature planes 15 using the block region 3A are obtained.

In this manner, the image processing device 8 includes co-occurrence distribution acquiring means for acquiring distributions of co-occurrences of luminance gradient directions from images.

Then, the image processing device 8 determines whether all the pixels have been plotted (Step 35).

If there are pixels that have not yet been plotted (Step 35; N), the image processing device 8 returns to Step 20, selects a subsequent pixel, and plots it on the feature plane 15.

On the other hand, if all the pixels of the block region 3 have been plotted (Step 35; Y), the image processing device 8 determines whether all the block regions 3 have been plotted (Step 40).

If there is a block region 3 which has not yet been plotted (Step 40; N), the image processing device 8 returns to Step 15, selects the next block region 3, and performs the plotting on the feature plane 15.

On the other hand, when the plotting for all the block regions 3 have been performed (Step 40; Y), the image processing device 8 outputs the feature plane 15 generated for each offset pixel in every block region 3 to the RAM 83 from an array of the RAM 83 (Step 45).

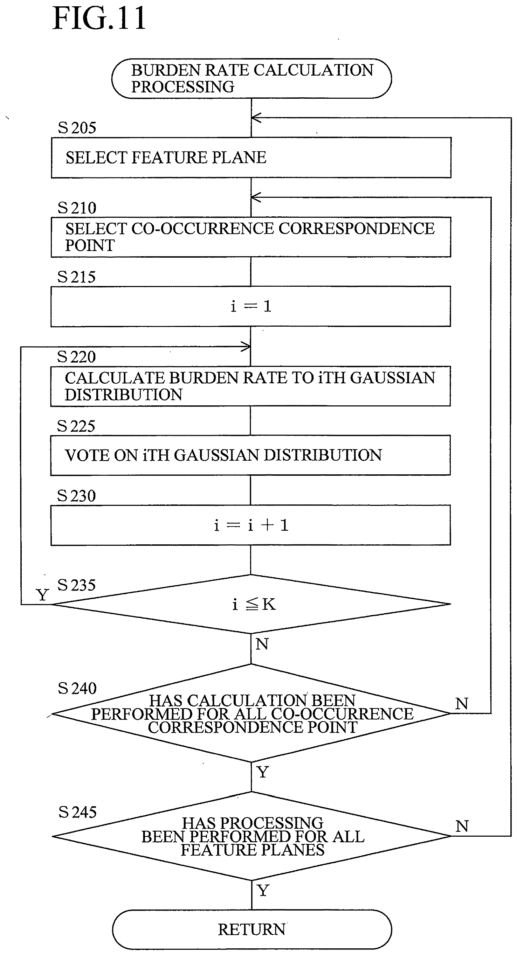

FIG. 11 is a flowchart for illustrating burden rate calculation processing in Step 170.

First, the image processing device 8 selects the feature plane 15 as a processing target, and stores it in the RAM 83 (Step 205).

Subsequently, the image processing device 8 selects the co-occurrence correspondence point 51 from the feature plane 15 stored in the RAM 83, and stores coordinate values thereof in the RAM 83 (step 210).

Then, the image processing device 8 initializes a parameter i, which counts the ellipse 63-i, to 1 and stores it in RAM 83 (Step 215).

Then, the image processing device 8 reads the coordinate values of the co-occurrence correspondence point 51 stored in the RAM 83 at Step 210, also reads parameters of the ellipse 63-i (center coordinate values (x0, y0), and ri_x and ri_y which define widths of a principal axis and an accessory axis), and substitutes them into Expressions (3) and (4) to calculate an approximate value of the burden rate in the Gaussian distribution 54-i (a Gaussian distribution corresponding to the ellipse 63-i) of the co-occurrence correspondence point 51.

Further, the image processing device 8 quantizes the approximate value of the burden rate by referring to the quantization table 21 and stores it in the RAM 83 as a final burden rate (Step 220).

Then, the image processing device 8 adds the burden rate to a burden rate total value of the Gaussian distribution 54-i and stores it in the RAM 83, thereby voting the burden rate for the Gaussian distribution 54-i (Step 225).

Subsequently, the image processing device 8 increments i by 1 and stores it in the RAM 83 (Step 230) to determine whether the stored i is less than or equal to the mixed number K (Step 235).

If i is K or less (Step 235; Y), the image processing device 8 returns to Step 220 and repeats the same processing on the subsequent Gaussian distribution 54-i.

On the other hand, if i is greater than K (Step 235; N), since voting has been performed for all the Gaussian distributions 54 concerning the co-occurrence correspondence point 51, the image processing device 8 determines whether the burden rates have been calculated for all the co-occurrence correspondence points 51 of the feature planes 15 (Step 240).

If there is a co-occurrence correspondence point 51 for which the burden rate has not yet been calculated (Step 240; N), the image processing device 8 returns to Step 210 to select the next co-occurrence correspondence point 51.

On the other hand, if the burden rate has been calculated for all the co-occurrence correspondence points 51 (Step 240; Y), the image processing device 8 further determines whether voting processing for each Gaussian distribution 54 using the burden rate has been performed for all the feature planes 15 (Step 245).

If there is a feature plane 15 that has not yet been processed (Step 245; N), the image processing device 8 returns to Step 205 to select the next feature plane 15.

On the other hand, if the processing has been performed for all the feature planes 15 (Step 245; Y), the image processing device 8 returns to a main routine.

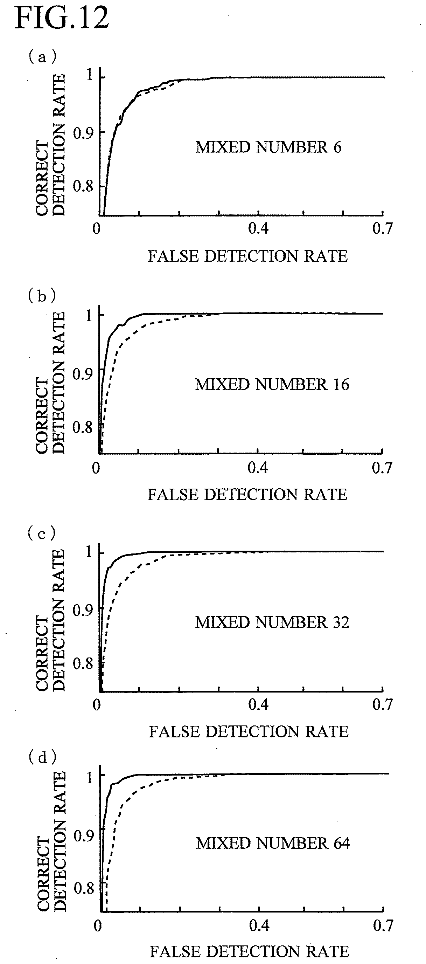

FIG. 12 is a graph showing experimental results of the image recognition according to this embodiment.

FIGS. 12 (a) to (d) represent cases where the mixed number K=6, 16, 32, and 64, respectively.

An axis of ordinate represents a correct detection rate, and an axis of abscissa represents a false detection rate. Solid lines represent image recognition results by a conventional method, and dashed lines represent image recognition results by the image processing device 8.

As shown in each drawing, the image recognition by the image processing device 8 was slightly lower than that by the conventional technique, but an accuracy sufficient to withstand practical use was assured.

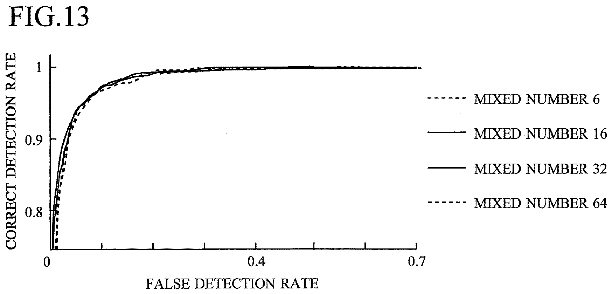

FIG. 13 is a graph showing image recognition results by the image processing device 8 for each mixed number in a superimposed manner.

Thus, an identification accuracy for each mixed number K=6, 16, 32, and 64 was found to be almost equal.

In case of K=6, the memory used was about 3.0 KB, which is the mixed number x number of offsets x number of blocks x 24 bits (parameters of the ellipses: 2 center coordinate values, 6 bits each for 2 widths).

Therefore, adopting the image processing device 8 with a low mixed number without increasing the mixed number enables reducing memory consumption and computational costs while ensuring a practical accuracy.

It is to be noted that, in the embodiment described above, three resolution images of the same subject were prepared and the co-occurrences of the gradient directions at the offset distances 1 to 3 were obtained, but it is not restricted thereto, and images with two types of resolutions or four or more types of resolutions can be combined as long as a necessary image recognition accuracy can be obtained.

Furthermore, in the embodiment, the co-occurrences of the gradient directions were obtained across a plurality of resolutions of the high-resolution image 11, the medium-resolution image 12, and the low-resolution image 13, but co-occurrences can be taken within each resolution, such as taking co-occurrences within the high-resolution image 11, taking co-occurrences within the medium-resolution image 12, and taking co-occurrences within the low-resolution image 13, and they can be plotted on different feature planes 15.

Alternatively, it is possible to generate the feature plane 15 by taking co-occurrences within a single resolution, as is done in CoHOG.

Further, in this embodiment, the ellipse 63 whose width direction is parallel or perpendicular to the coordinate axis of the reference GMM 55 was used to calculate the base functions, but an ellipse 62 whose width direction has an arbitrary angle can be also used.

In this case, if all the elements, including non-diagonal elements, of the variance-covariance matrix of the reference GMM 55 are quantized to 2 raised to the power of n, the calculation of the burden rate using the base functions may be performed by the bit shift.

It is also possible to apply the same base functions as for the ellipse 63 by rotating the coordinate system in accordance with an angle of the ellipse 62 to transform the coordinates, and in this case, if an angle of rotation is also quantized by 2 raised to the power of n, the calculation may be easily performed by the bit shift.

Various variations are possible on the embodiments described above.

For example, in the embodiment described, the reference GMM 55 was created by learning the image showing the image recognition target, but it is also possible to determine the image showing the image recognition target as a positive image and an image of just the background as a negative image and create the reference GMM 55 from differences between them.

A brief description of this method is as follows.

First, a probability distribution p(x) using the positive image and a probability distribution q(x) using the negative image are created.

Differentiating between them subtracts and weakens a portion where they are similar and leaves a portion where they are different.

The portion which is subtracted is a portion where p(x) and q(x) are similar and where distinguishing a person or a background is difficult.

Therefore, the differences produce a probability distribution which more clearly represents human-like features and background-like features.

Samples can be rearranged by generating random numbers based on this probability distribution to create a reference GMM 55 having features in portions with low similarity between the person and the background. This technique is called the inverse function method.

Using this reference GMM 55 enables more clearly performing the image recognition of the person and the background.

It is to be noted that, instead of simply calculating the differences, a measurement space (a space for which how to measure a distance between p(x) and q(x) is defined) for calculating the differences can be set up, and the differences in that space can be used.

Amounts of information to be weighed in these measurement spaces include, for example, an amount of KL (Kullback-Leibler) information, an amount of JS (Jensen-Shannon) information having symmetry, and the like. These amounts of information can also be used to determine the similarity between a positive image and a negative image and create a reference GMM 55 focusing on the differences between them.

The following effects can be obtained by the embodiment described above.
(1) Instead of storing the burden rate table which requires a very large amount of memory, storing the parameters which represent the base functions necessary to calculate the burden rate in the memory enables greatly reducing the memory usage.
(2) Instead of storing the burden rate table in the memory, storing the parameters of the base functions in the memory enables implementation in small-scale FPGAs and semiconductor devices.
(3) The GMM, which represents a frequency distribution of co-occurrence pairs of the gradient directions obtained from the image learned, can be approximated and represented as an ellipse.
(4) When approximating the GMM, restricting a shape (a width) of the ellipse and quantizing it enables implementation with less memory usage.
(5) Approximating a radius of the ellipse, i.e., a width of the normal distribution by 2 raised to the power of n enables using an algorithm based on the bit shift for inference and calculating the burden rate by low-cost calculations.

### REFERENCE SIGNS LIST

- 2: Image
- 3: Block region
- 5: Pixel of interest
- 8: Image processing device
- 11: High-resolution image
- 12: Medium-resolution image
- 13: Low-resolution image
- 15: Feature plane
- 21: Quantization table
- 51: Co-occurrence correspondence point
- 53: Probability density function
- 54: Gaussian distribution
- 55: Reference GMM
- 60: Cluster
- 62: Ellipse
- 63: Ellipse
- 81: CPU
- 82: ROM
- 83: RAM
- 84: Storage device
- 85: Camera
- 86: Input unit
- 87: Output unit

## Claims

1. An image processing device comprising:
image acquiring means for acquiring an image;
co-occurrence distribution acquiring means for acquiring a distribution of co-occurrences of luminance gradient directions from the acquired image;
calculating means for calculating a base function using the distribution of the co-occurrences, and calculating a feature amount of the image using the base function; and
outputting means for outputting the calculated feature amount.

2. The image processing device according to claim 1, comprising parameter storing means for storing a parameter for defining a base function which approximates a Gaussian mixture model serving as a reference for image recognition,
wherein the calculating means calculates the feature amount of the image using the Gaussian mixture model by substituting a distance from each co-occurrence point constituting the acquired distribution of the co-occurrences to a center of the base function and the stored parameter in the base function formula.

3. The image processing device according to claim 1 or 2,
wherein the parameter storing means stores the parameter in accordance with each Gaussian distribution constituting the Gaussian mixture model, and
the calculating means calculates a value which becomes an element of the feature amount by using the parameter of the Gaussian distribution in accordance with each Gaussian distribution.

4. The image processing device according to claim 1, 2, or 3,
wherein the calculating means approximately calculates a burden rate using the distribution of co-occurrences for each Gaussian distribution as a value of the element of the feature amount.

5. The image processing device according to claim 1, 2, 3, or 4,
wherein the parameter is a constant which defines an ellipse corresponding to a width of each of the Gaussian distributions.

6. The image processing device according to claim 5,
wherein a direction of a maximum width of the ellipse is parallel or perpendicular to an orthogonal coordinate axis defining the Gaussian mixture model.

7. The image processing device according to any one of claims 1 to 6,
wherein the parameter is quantized to a power of 2, and the calculating means performs the calculation by using a bit shift.

8. The image processing device according to any one of claims 1 to 7, comprising image recognizing means for performing image recognition of the image by using the feature amount output by the outputting means.

9. An image processing program for causing a computer to realize:
an image acquiring function configured to acquire an image;
a co-occurrence distribution acquiring function configured to acquire a distribution of co-occurrences of luminance gradient directions from the acquired image;
a calculating function configured to calculate a base function using the distribution of the co-occurrences, and calculate a feature amount of the image using the base function; and
an outputting function configured to output the calculated feature amount.
